# FASCICULE DE BREVET EUROPEEN

(11) **EP 3 259 173 B1**
(45) Date de publication et mention de la délivrance du brevet: **06.02.2019**
(21) Numéro de dépôt: 15821113.6
(22) Date de dépôt: 11.12.2015
(51) Int. Cl.: B62D 21/15, B62D 25/04, B62D 21/09

(54) **RENFORT POUR STRUCTURE DE CAISSE DE VÉHICULE AUTOMOBILE**
VERSTÄRKUNG FÜR EINE KRAFTFAHRZEUGKAROSSERIESTRUKTUR
REINFORCEMENT FOR A MOTOR VEHICLE BODY STRUCTURE

(30) Priorité: 19.02.2015 FR 1551430
(43) Date de publication de la demande: 27.12.2017
(73) Titulaire: Renault S.A.S., 92100 Boulogne-Billancourt (FR)
(72) Inventeur: FOUBERT, Vincent, 78200 Boissy Mauvoisin (FR); RAFFY, Philippe, 91430 Igny (FR)
(86) Numéro de dépôt international: PCT/FR2015/053438
(87) Numéro de publication internationale: WO 2016/132025

(56) Documents cités:
- FR-A1- 2 281 732
- FR-A1- 2 813 271
- FR-A1- 2 919 564
- FR-A1- 2 932 146

## Description

L'invention concerne une structure de caisse de véhicule automobile, le véhicule s'étendant suivant un axe longitudinal, la structure de caisse comprenant une structure avant s'étendant transversalement suivant un axe sensiblement perpendiculaire à l'axe longitudinal et séparant une cellule d'habitacle d'un compartiment moteur, la structure avant comprenant une paroi verticale, la structure de caisse comportant, en avant de la paroi verticale, des longerons longitudinaux qui s'étendent de part et d'autre du compartiment moteur et, en arrière et sensiblement à proximité immédiate de la paroi verticale, des pieds avant destinés à supporter des charnières d'ouvrants du véhicule et prolongeant la structure avant latéralement et verticalement du côté de la cellule d'habitacle, chaque pied avant comprenant une doublure de pied s'étendant du côté intérieur du véhicule, et un renfort de pied s'étendant entre la doublure de pied et un côté de caisse, la doublure de pied et le renfort de pied étant reliés entre eux suivant un profil fermé délimitant un premier corps creux du côté de la cellule d'habitacle.

Un exemple d'une telle structure de caisse est décrit dans le document de brevet FR 2 813 271. Dans ce document, il est proposé un ensemble de structure de caisse comportant des renforts de cloche de suspension, destinés à prévenir une déformation éventuelle en rotation d'au moins une cloche. En effet, en cas de choc frontal subit par le véhicule, la déformation et la rotation des cloches de suspension engendre un désalignement des ouvrants par rapport à l'axe longitudinal du véhicule, ce qui peut entraîner une déformation de l'habitacle ou une pénétration des cloches dans l'habitacle au risque de blesser les occupants. Aussi, pour pallier ce problème, le document précité prévoit la mise en place d'un élément extérieur et d'un élément intérieur de renfort, qui sont agencés en arrière d'au moins une cloche, côté compartiment moteur, pour prévenir les mouvements de déformation en rotation de la cloche. Toutefois, cet ensemble de structure de caisse n'évite pas les déformations du tablier dans l'habitacle lors d'un choc frontal du véhicule, ni ne permet de limiter suffisamment la rotation prononcée du pied avant du véhicule dans cette situation de choc frontal.

On connaît aussi du document FR 2 919 564 un ensemble de carrosserie d'un véhicule automobile dans lequel un raidisseur est fixé sur le côté de caisse du côté du compartiment moteur en s'étendant sensiblement de la cloche de suspension à un renfort de pied s'étendant entre la doublure d'aile et le côté d'habitacle servant de renfort à un pied avant du véhicule, de sorte que, en cas de choc frontal, ce raidisseur vient en appui contre ce renfort de pied. La fixation du raidisseur sur le côté de caisse, côté compartiment moteur, permet ainsi de contrer la rotation du pied avant autour de l'axe Z du véhicule qui intervient lors d'un choc frontal. Toutefois, cette solution implique de modifier le dimensionnement du bloc avant en amont du pied avant du véhicule.

Par ailleurs, pour rendre le pied avant du véhicule relativement indéformable, il est également connu de dimensionner ce pied avant en conséquence et de l'équiper de renforts notamment à ses parties supérieure et inférieure, ce qui augmente fortement sa masse et de ce fait, la masse totale du véhicule.

Dans ce contexte, la présente invention a pour but de proposer une structure de caisse exempte de l'une au moins des limitations précédemment évoquées et, en particulier, qui permette d'améliorer la sécurité des passagers avant du véhicule.

A cet effet, la structure de caisse de l'invention, par ailleurs conforme à la définition générique qu'en donne le préambule ci-dessus, est essentiellement caractérisée en ce qu'elle comprend un élément de renfort de la doublure de pied fixé contre une face intérieure de la doublure de pied à l'intérieur du premier corps creux, de sorte que l'élément de renfort délimite avec la face intérieure de la doublure de pied un second corps creux agencé à l'intérieur du premier corps creux.

Avantageusement, l'élément de renfort de la doublure de pied est disposé sur la face intérieure de la doublure de pied sensiblement en regard d'une position définie sur une face extérieure de la doublure de pied, opposée à la face intérieure, au niveau de laquelle est destinée à être fixée une équerre de liaison adaptée pour fixer la doublure de pied sur la paroi verticale.

Avantageusement, l'élément de renfort comprend une première aile présentant une section transversale en forme d'oméga comportant une partie centrale continue de section transversale en U de hauteur sensiblement constante.

Avantageusement, la première aile s'étend sur la face intérieure de la doublure de pied depuis un bord de la doublure de pied délimitant un passage de roue du véhicule vers un bord opposé de la doublure de pied en faisant un angle non nul par rapport à l'axe longitudinal et à l'axe vertical du véhicule.

De préférence, l'élément de renfort comprend une deuxième aile s'étendant parallèlement à l'axe vertical du véhicule et sensiblement à plat contre la face intérieure de la doublure de pied depuis une extrémité de la première aile.

De préférence, l'élément de renfort est soudé sur la face intérieure de la doublure de pied.

Avantageusement, l'élément de renfort présente une forme générale sensiblement en V.

L'invention concerne également un véhicule automobile comprenant une structure de caisse telle que décrite ci-dessus.

D'autres particularités et avantages de l'invention ressortiront à la lecture de la description faite ci-après d'un mode de réalisation particulier de l'invention, donné à titre indicatif mais non limitatif, en référence aux figures annexée dans lesquelles :
- la Figure 1 est une vue schématique de dessus d'une caisse de véhicule automobile;
- la Figure 2 est une vue schématique de dessus d'une caisse de véhicule automobile conforme à l'invention ;
- la Figure 3 est une vue de détail de l'élément de renfort du pied avant de véhicule vu dans son environnement ;
- la Figure 4 est une vue isolée de l'élément de renfort de la figure 3.

Dans ce qui suit, les indications telles que longitudinale, transversale, verticale, ainsi que les termes tels que avant, arrière, gauche, droit, inférieur, supérieur sont définis par rapport aux orientations du véhicule dans lesquelles l'axe X est l'axe longitudinal du véhicule orienté vers l'arrière du véhicule, l'axe Y est l'axe transversal orienté de gauche à droite et Z est l'axe vertical orienté de bas en haut.

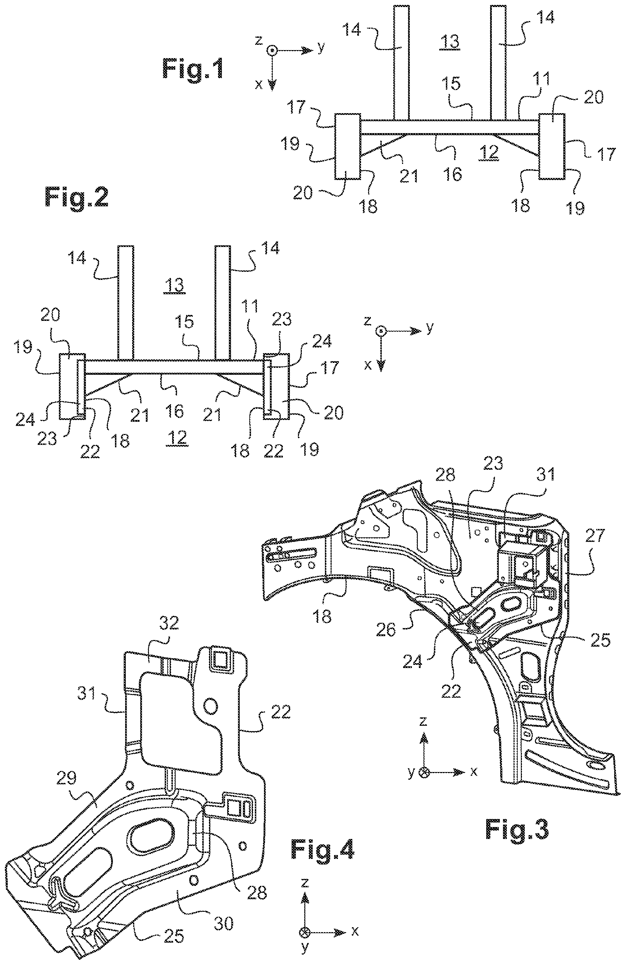

Dans la figure 1, une structure de caisse 10 d'un véhicule automobile s'étend suivant un axe longitudinal X. Elle comprend une structure avant 11 s'étendant suivant l'axe transversal Y et séparant une cellule d'habitacle 12 d'un compartiment moteur 13. Le compartiment moteur 13 est supporté par des longerons longitudinaux avant 14 et délimité par une paroi latérale, non représentée, sur chacun des côtés du véhicule. La structure avant 11 comprend une traverse inférieure de baie 15 disposée sensiblement horizontalement et reliée à une paroi 16 disposée sensiblement verticalement, appelée tablier. Une doublure de la traverse inférieure de baie 15 est disposée en avant du tablier 16 et reliée à la fois à ce dernier et à la traverse inférieure de baie.

La structure de caisse 10 comprend également de chaque côté un pied avant 17, qui prolonge la structure avant transversale 14 latéralement et verticalement du côté de la cellule d'habitacle 12. Chaque pied avant 17 est destiné à supporter des charnières d'ouvrants du véhicule. Le pied avant gauche comprend une doublure de pied 18, qui s'étend immédiatement en arrière du tablier 16 suivant l'axe longitudinal X, du côté intérieur du véhicule par rapport au côté de caisse, et un renfort de de pied 19 s'étendant entre la doublure de pied 18 et le côté de caisse, la doublure de pied 18 et le renfort de pied 19 étant reliés entre eux et formant un profil fermé. Ainsi, la doublure de pied 18 délimite avec le renfort de pied 19 un corps creux 20. Le pied avant droit présente une structure correspondante. Le tablier 16 est fixé à la doublure de pied 18 de chaque pied avant 17 par l'intermédiaire d'une équerre de liaison 21 disposée entre la doublure de pied et 18 et le tablier 16 du côté de la cellule d'habitacle 12.

Comme illustré sur la figure 2, la structure de caisse 10 selon l'invention comprend un élément de renfort 22 de la doublure de pied 18, cet élément de renfort 22 étant fixé contre la face intérieure 23 de la doublure de pied 18, c'est-à-dire dans le corps creux 20 constitué entre la doublure de pied 18 et le côté de caisse, de sorte que l'élément de renfort 22 de la doublure de pied délimite avec la face intérieure de la doublure de pied 18, un corps creux 24. La doublure de pied 18 et le renfort de pied 19 forment ainsi un premier corps creux 20 à l'intérieur duquel est agencé l'élément de renfort 22 de la doublure de pied 18, qui vient s'appuyer contre la face intérieure 23 de la doublure de pied 18, en délimitant avec celle-ci un second corps creux 24 à l'intérieur du premier corps creux 20. Autrement dit, la face intérieure 23 de la doublure de pied 18 est la face de la doublure de pied 18 positionnée en regard du côté de caisse, opposée à la face de la doublure de pied 18, dite face extérieure, agencée du côté intérieur du véhicule et sur laquelle est fixée l'équerre de liaison 21 avec le tablier 16.

Comme on le voit mieux aux figures 3 et 4, l'élément de renfort 22 de la doublure de pied, disposé de la côté de la cellule d'habitacle 12, est constitué d'une pièce unique, comprenant essentiellement une première aile 25 à section transversale sensiblement constante en forme d'oméga, destinée à être fixée contre la face intérieure 23 de la doublure de pied 18, préférentiellement sensiblement à hauteur de la liaison avec l'équerre de liaison 21 du côté de la face extérieure de la doublure de liaison 18. Autrement dit, l'élément de renfort 22 est préférentiellement disposé sur la face intérieure 23 de la doublure de pied 18, sensiblement en regard de la position définie sur la face extérieure de la doublure de pied où est fixée l'équerre de liaison 21 de la doublure de pied 18 avec le tablier 16.

De préférence, la première aile 25 de l'élément de renfort 22 s'étend sur la face intérieure 23 de la doublure de pied 18 selon un angle non nul par rapport à l'axe longitudinal X et l'axe vertical Z du véhicule, par exemple suivant un angle de sensiblement 45°, depuis un bord 26 de la doublure de pied 18 délimitant un passage de roue du véhicule vers un bord opposé 27 de la doublure de pied 18.

Plus précisément, la première aile 25 de l'élément de renfort 22 comprend une partie centrale continue 28 de section transversale en forme générale de U, permettant de délimiter le second corps creux 24 lorsque la première aile 25 vient s'appuyer contre la face intérieure 23 de la doublure de pied 18. La hauteur de la section en U est de préférence sensiblement constante. La partie centrale continue 28 est disposée entre une bordure supérieure 29 et une bordure inférieure 30 également continues. Les bordures supérieure 29 et inférieure 30 de la première aile 25 de l'élément de renfort 22 sont fixés par exemple par des points de soudage électrique sur la face intérieure 23 de la doublure de pieds 18.

L'élément de renfort 22 ainsi agencé sur la face intérieure de la doublure de pied améliore sensiblement la reprise des efforts issus du longeron avant et du contact moteur en cas de choc frontal du véhicule, tout en limitant la rotation du pied avant autour de l'axe Z du véhicule, ce qui par voie de conséquence permet de limiter notablement les intrusions d'éléments du compartiment moteur dans la cellule d'habitacle du véhicule.

L'élément de renfort 22 peut également comprendre une deuxième aile 31, s'étendant sensiblement à plat, parallèlement à l'axe vertical Z du véhicule, sur la face intérieure 23 de la doublure de pied 18, depuis une extrémité de la première aile 25 en suivant le bord opposé 27 de la doublure de pied 18, de sorte que l'élément de renfort 22 présente globalement une forme générale sensiblement en V. La deuxième aile 31 disposé à plat contre la face intérieure 23 de la doublure de pied permet d'améliorer encore la reprise des efforts par l'élément de renfort 22. La deuxième aile 31 présente une bordure périphérique 32 fixée par exemple par des points de soudage électrique sur la face intérieure 23 de la doublure de pieds 18.

L'élément de renfort 22 peut par exemple être obtenu par emboutissage. Il est par exemple réalisé en tôle d'acier d'épaisseur comprise dans une plage de 1 mm à 2 mm, avantageusement de 1,1 mm à 1,8 mm, pour des nuances d'acier à limite d'élasticité Re comprise dans une plage de 300 à 2000 MPa, avantageusement de 350 à 1800 Mpa.

L'élément de renfort selon l'invention permet donc d'améliorer la performance en termes de limitation de la rotation du pied avant en cas de choc frontal du véhicule. Il permet également d'atteindre cet objectif avec un nombre de pièces limité, en l'occurrence avec une pièce de renfort unique, ce qui est bénéfique à la fois en termes de réduction de la masse globale du véhicule et de réduction du temps de cycle de production en usine.

## Revendications

1. Structure de caisse (10) de véhicule automobile, le véhicule s'étendant suivant un axe longitudinal (X), la structure de caisse (10) comprenant une structure avant (11) s'étendant transversalement suivant un axe (Y) sensiblement perpendiculaire à l'axe longitudinal et séparant une cellule d'habitacle (12) d'un compartiment moteur (13), la structure avant (11) comprenant une paroi verticale (16), la structure de caisse (10) comportant, en avant de la paroi verticale (16), des longerons longitudinaux (14) qui s'étendent de part et d'autre du compartiment moteur (13) et, en arrière et sensiblement à proximité immédiate de la paroi verticale (16), des pieds avant (17) destinés à supporter des charnières d'ouvrants du véhicule et prolongeant la structure avant (11) latéralement et verticalement du côté de la cellule d'habitacle (12), chaque pied avant (17) comprenant une doublure de pied (18) s'étendant du côté intérieur du véhicule, et un renfort de pied (19) s'étendant entre la doublure de pied (18) et un côté de caisse, la doublure de pied (18) et le renfort de pied (19) étant reliés entre eux suivant un profil fermé délimitant un premier corps creux (20) du côté de la cellule d'habitacle (12), **caractérisée en ce que** la structure de caisse comprend un élément de renfort (22) de la doublure de pied (18) fixé contre une face intérieure (23) de la doublure de pied (18) à l'intérieur du premier corps creux (20), de sorte que l'élément de renfort (22) délimite avec la face intérieure (23) de la doublure de pied (18) un second corps creux (24) agencé à l'intérieur du premier corps creux (20).

2. Structure de caisse selon la revendication 1, **caractérisée en ce que** l'élément de renfort (22) de la doublure de pied est disposé sur la face intérieure (23) de la doublure de pied (18) sensiblement en regard d'une position définie sur une face extérieure de la doublure de pied (18), opposée à la face intérieure, au niveau de laquelle est destinée à être fixée une équerre de liaison (21) adaptée pour fixer la doublure de pied sur la paroi verticale (16).

3. Structure de caisse selon l'une quelconque des revendications 1 ou 2, **caractérisée en ce que** l'élément de renfort (22) comprend une première aile (25) présentant une section transversale en forme d'oméga comportant une partie centrale (28) continue de section transversale en U de hauteur sensiblement constante.

4. Structure de caisse selon la revendication 3, **caractérisée en ce que** la première aile (25) s'étend sur la face intérieure (23) de la doublure de pied (18) depuis un bord (26) de la doublure de pied (18) délimitant un passage de roue du véhicule vers un bord opposé (27) de la doublure de pied (18) en faisant un angle non nul par rapport à l'axe longitudinal et à l'axe vertical du véhicule.

5. Structure de caisse selon l'une quelconque des revendications 3 ou 4, **caractérisée en ce que** l'élément de renfort (22) comprend une deuxième aile (31) s'étendant parallèlement à l'axe vertical (Z) du véhicule et sensiblement à plat contre la face intérieure (23) de la doublure de pied (18) depuis une extrémité de la première aile (25).

6. Structure de caisse selon l'une quelconque des revendications précédentes, **caractérisée en ce que** l'élément de renfort (22) est soudé à la face intérieure (23) de la doublure de pied (18).

7. Structure de caisse selon l'une quelconque des revendications précédentes, **caractérisé en ce que** l'élément de renfort (22) présente une forme générale sensiblement en V.

8. Véhicule automobile comprenant une structure de caisse selon l'une quelconque des revendications précédentes.

## Patentansprüche

1. Karosseriestruktur (10) eines Kraftfahrzeugs, wobei sich das Fahrzeug gemäß einer longitudinalen Achse (X) erstreckt, wobei die Karosseriestruktur (10) eine vordere Struktur (11), welche sich quer gemäß einer Achse (Y) im Wesentlichen senkrecht zu der longitudinalen Achse erstreckt und eine Fahrgastzelle (12) von einem Motorraum (13) trennt, wobei die vordere Struktur (11) eine vertikale Wand (16) aufweist, wobei die Karosseriestruktur (10) vor der vertikalen Wand (16) Längsträger (14), welche sich beiderseits des Motorraums (13) erstrecken, und hinter und im Wesentlichen in direkter Nachbarschaft zu der vertikalen Wand (16) vordere Säulen (17) umfasst, welche dafür vorgesehen sind, die Türscharniere des Fahrzeugs zu tragen und die vordere Struktur (11) seitlich und vertikal seitens der Fahrgastzelle (12) zu verlängern, wobei jede vordere Säule (17) eine Säulenauskleidung (18) aufweist, welche sich an der inneren Seite des Fahrzeugs erstreckt, und wobei sich eine Säulenverstärkung (19) zwischen der Säulenauskleidung (18) und einer Karosserieseite erstreckt, wobei die Säulenauskleidung (18) und die Säulenverstärkung (19) gemäß einem geschlossenen Profil, welches einen ersten hohlen Körper (20) auf der Seite der Fahrgastzelle (12) abgrenzt, miteinander verbunden sind, **dadurch gekennzeichnet, dass** die Karosseriestruktur ein Verstärkungselement (22) der Säulenauskleidung (18) aufweist, welches an einer inneren Fläche (23) der Säulenauskleidung (18) im Inneren des ersten hohlen Körpers (20) befestigt ist, so dass das Verstärkungselement (22) mit der inneren Fläche (23) der Säulenauskleidung (18) einen zweiten hohlen Körper (24) abgrenzt, welcher im Inneren der ersten hohlen Körpers (20) eingerichtet ist.

2. Karosseriestruktur nach Anspruch 1, **dadurch gekennzeichnet, dass** das Verstärkungselement (22) der Säulenauskleidung an der inneren Fläche (23) der Säulenauskleidung (18) im Wesentlichen gegenüber einer Position angeordnet ist, welche an einer äußeren Fläche der Säulenauskleidung (18) definiert ist und der inneren Fläche gegenüber liegt, auf deren Höhe ein Verbindungswinkel (21) dafür vorgesehen ist, um befestigt zu sein, welcher dafür angepasst ist, um die Säulenauskleidung an der vertikalen Wand (16) zu befestigen.

3. Karosseriestruktur nach einem der Ansprüche 1 oder 2, **dadurch gekennzeichnet, dass** das Verstärkungselement (22) einen ersten Flügel (25) aufweist, welcher einen Omega-förmigen Querschnitt aufweist, welcher einen kontinuierlichen zentralen Abschnitt (28) mit U-förmigem Querschnitt von im Wesentlichen konstanter Höhe umfasst.

4. Karosseriestruktur nach Anspruch 3, **dadurch gekennzeichnet, dass** sich der erste Flügel (25) über die innere Fläche (23) der Säulenauskleidung (18) von einem Rand (26) der Säulenauskleidung (18), welcher einen Radkasten des Fahrzeugs begrenzt, zu einem gegenüber liegenden Rand (27) der Säulenauskleidung (18) erstreckt, indem er einen Winkel ungleich Null in Bezug auf die longitudinale Achse und auf die vertikale Achse des Fahrzeugs bildet.

5. Karosseriestruktur nach einem der Ansprüche 3 oder 4, **dadurch gekennzeichnet, dass** das Verstärkungselement (22) einen zweiten Flügel (31) aufweist, welcher sich parallel zu der vertikalen Achse (Z) des Fahrzeugs und im Wesentlichen flach an der inneren Fläche (23) der Säulenauskleidung (18) von einem Ende des ersten Flügels (25) erstreckt.

6. Karosseriestruktur nach einem der vorhergehenden Ansprüche, **dadurch gekennzeichnet, dass** das Verstärkungselement (22) an die innere Fläche (23) der Säulenauskleidung (18) geschweißt ist.

7. Karosseriestruktur nach einem der vorhergehenden Ansprüche, **dadurch gekennzeichnet, dass** das Verstärkungselement (22) eine allgemeine Form im Wesentlichen eines V aufweist.

8. Kraftfahrzeug, aufweisend eine Karosseriestruktur nach einem der vorhergehenden Ansprüche.

## Claims

1. Motor vehicle body structure (10), the vehicle extending along a longitudinal axis (X), the body structure (10) comprising a front structure (11) which extends transversely along an axis (Y) substantially perpendicular to the longitudinal axis and separates a passenger compartment (12) from an engine compartment (13), the front structure (11) comprising a vertical wall (16), the body structure (10) comprising longitudinal side members (14) in front of the vertical wall (16) which extend on either side of the engine compartment (13), and front legs (17) behind and substantially immediately next to the vertical wall (16) which are intended to support the vehicle door hinges and which extend the front structure (11) laterally and vertically on the side of the passenger compartment (12), each front leg (17) comprising a leg lining (18) extending on the inner side of the vehicle and a leg reinforcement (19) extending between the leg lining (18) and a side of the body, the leg lining (18) and the leg reinforcement (19) being interconnected as a closed profile defining a first hollow body (20) on the side of the passenger compartment (12), **characterized in that** the body structure comprises a reinforcing element (22) for the leg lining (18) which is fixed against an inner face (23) of the leg lining (18) inside the first hollow body (20), such that the reinforcing element (22) defines, with the inner face (23) of the leg lining (18), a second hollow body (24) arranged inside the first hollow body (20) .

2. Body structure according to Claim 1, **characterized in that** the reinforcing element (22) of the leg lining is arranged on the inner face (23) of the leg lining (18) substantially facing a position defined on an outer face of the leg lining (18) opposite the inner face, at the level of which a connecting bracket (21) is intended to be fixed which is suitable for fixing the leg lining to the vertical wall (16).

3. Body structure according to either one of Claims 1 and 2, **characterized in that** the reinforcing element (22) comprises a first fin (25) with an omega-shaped cross section comprising a continuous central portion (28) of U-shaped cross section of substantially constant height.

4. Body structure according to Claim 3, **characterized in that** the first fin (25) extends over the inner face (23) of the leg lining (18) from an edge (26) of the leg lining (18) delimiting a vehicle wheel housing towards an opposite edge (27) of the leg lining (18), forming an angle not equal to zero relative to the longitudinal axis and the vertical axis of the vehicle.

5. Body structure according to either one of Claims 3 and 4, **characterized in that** the reinforcing element (22) comprises a second fin (31) extending parallel to the vertical axis (Z) of the vehicle and substantially flat against the inner face (23) of the leg lining (18) from one end of the first fin (25) .

6. Body structure according to any one of the preceding claims, **characterized in that** the reinforcing element (22) is welded to the inner face (23) of the leg lining (18).

7. Body structure according to any one of the preceding claims, **characterized in that** the reinforcing element (22) is generally substantially V-shaped.

8. Motor vehicle comprising a body structure according to any one of the preceding claims.
